# EUROPEAN PATENT APPLICATION

(11) **EP 3 531 671 A1**
(43) Date of publication of application: **28.08.2019**
(21) Application number: 18211985.9
(22) Date of filing: 12.12.2018
(51) Int. Cl.: H04L 29/12

(54) **COMMUNICATION DEVICE AND METHOD OF CONTROLLING COMMUNICATION DEVICE**

(30) Priority: 27.02.2018 JP 2018033695
(71) Applicant: OMRON Corporation, Shiokoji-dori, Shimogyo-Ku Kyoto-shi Kyoto 600-8530 (JP)
(72) Inventor: UEDA, Takamasa, Kyoto, 600-8530 (JP)
(74) Representative: Ter Meer Steinmeister & Partner

(57) **Abstract**

To realize a communication device (2) capable of freely changing an IP address in accordance with a device. A communication device (2) according to the disclosure includes an IP address setting part (24) configured to set an IP address when the IP network is used. The IP address setting part (24) sets a network address included in the IP address based on an instruction signal received via a communication part (a communication IF (23)) and sets a host address based on an instruction signal from a hardware switch (22).

## Description

### BACKGROUND

### Technical Field

The disclosure relates to a communication device that performs communication in accordance with an Internet Protocol (IP) network.

### Description of Related Art

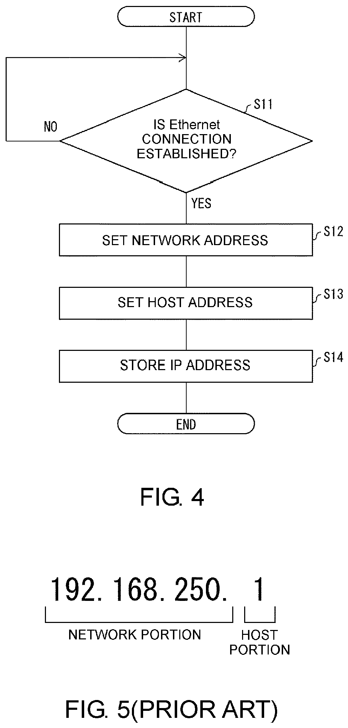

IP addresses are set in devices to perform communication connection in accordance with IP networks. IP addresses have network portions (network addresses) and host portions (host addresses). For example, in the case of an IP address (192.168.250.1) illustrated in FIG. 5, a network address of the network portion is "192.168.250." and a host address of the host portion is "I."

IP addresses are set in accordance with various methods in the related art. For example, Patent Document 1 (Japanese Laid-Open No. 2013-143613 (disclosed on July 20 2013)) discloses a technology for setting host addresses included in IP addresses by a dip switch. Further, Patent Document 2 (Japanese Laid-Open No. 10-308779 (disclosed on November 17 1998)) discloses a technology for setting parts of IP addresses by two rotary switches.

### SUMMARY

In both the above-described technologies of the related art, however, only partial addresses included in IP addresses can be changed and all the addresses included in the IP addresses may not be changed. Accordingly, a problem occurs in that the IP addresses may not be freely changed in accordance with devices.

An objective of the disclosure is to realize a communication device capable of freely changing an IP address in accordance with a device by enabling all addresses included in an IP address to be set.

To solve the foregoing problem, according to an embodiment of the disclosure, a communication device performs communication in accordance with an Internet Protocol (IP) network and includes an IP address setting part configured to set an IP address when the IP network is used. The IP address setting part sets a network address included in the IP address based on an instruction signal received from a setting device connected via a communication part and sets a host address based on an instruction signal from a hardware switch.

In the foregoing configuration, the IP address setting part can freely change the IP address in accordance with a device by setting the network address included in the IP address based on the instruction signal received from the setting device connected via the communication part and setting the host address based on the instruction signal from the hardware switch.

Since the host address can be changed without software, there is no limitation of a skill and authority of a worker. Since the host address is set by the hardware switch, the host address can be visually checked in the place in which a device is used. Further, since the network address is unfixed, the IP network to which many communication devices are connected can be flexibly configured.

In the embodiment of the disclosure, the hardware switch is preferably a hardware switch in which numerical values set in the communication device are visible.

In the foregoing configuration, since the hardware switch is a hardware switch in which the numerical values set in the communication device are visible, a user can view simply set numerical values, that is, values of the host address.

A rotary switch is preferable as the hardware switch, but the disclosure is not limited thereto. Another hardware switch such as a dip switch may be used as long as the switch is a hardware switch in which numerical values set in the communication device are visible.

In the embodiment of the disclosure, the IP address setting part preferably sets the network address based on the instruction signal received through one-to-one communication connection with the setting device.

In the foregoing configuration, even when the IP address is not set in the communication device, it is possible to perform communication with the setting device. Examples of the communication connection in this case include direct connection of Ethernet (registered trademark) and Universal Serial Bus (USB) connection.

In an embodiment of the disclosure, a method of controlling a communication device performing communication in accordance with an Internet Protocol (IP) network includes: setting a network address included in an IP address when the IP network is used, based on an instruction signal received from a setting device connected via a communication part; and setting a host address included in the IP address based on an instruction signal from a hardware switch.

In the foregoing configuration, the IP address can be freely changed in accordance with a device by setting a network address based on an instruction signal received via a communication part in the setting of the network address and setting a host address based on an instruction signal from a hardware switch in the setting of the host address.

Since the host address can be changed without software, there is no limitation of a skill and authority of a worker. Since the host address is set by the hardware switch, the host address can be visually checked in the place in which a device is used. Further, since the network address is unfixed, the IP network to which many communication devices are connected can be flexibly configured.

According to an aspect of the embodiment in the disclosure, it is possible to realize a communication device capable of freely changing an IP address in accordance with a device.

### BRIEF DESCRIPTION OF THE DRAWINGS

FIG. 1 a block diagram illustrating a communication coupler according to a first embodiment of the disclosure.
FIG. 2 is a schematic configuration diagram illustrating an embodiment of a system in which a node including the communication coupler illustrated in FIG. 1 is connected.
FIG. 3 is a diagram illustrating a display embodiment of an IP address setting tool in the communication coupler illustrated in FIG. 1.
FIG. 4 is a flowchart illustrating a flow of an IP address setting process in the communication coupler illustrated in FIG. 1.
FIG. 5 is a diagram illustrating an embodiment of a configuration of an IP address.

### DESCRIPTION OF THE EMBODIMENTS

### First embodiment

Hereinafter, embodiments related to one aspect of the disclosure (hereinafter also referred to as "present embodiments") will be described with reference to the drawings.

### 1. Application embodiment

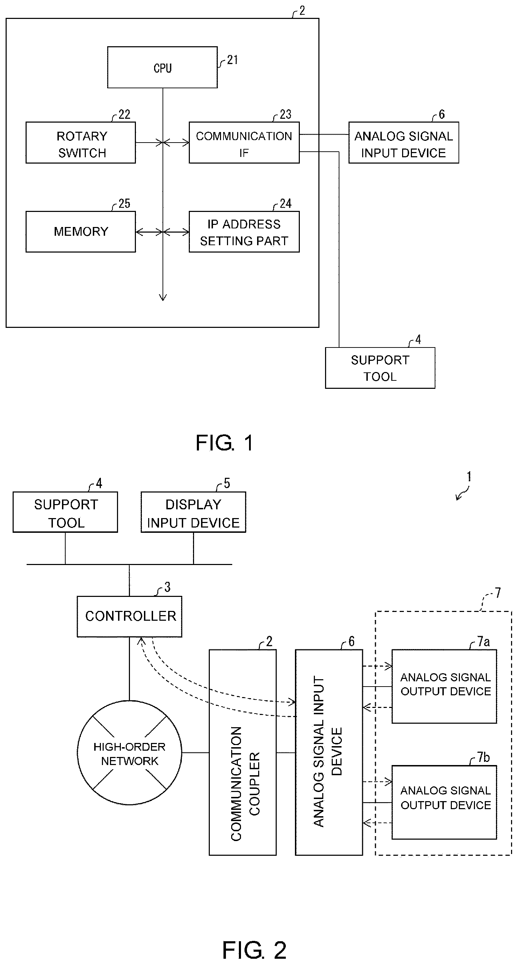

FIG. 1 is a diagram illustrating an embodiment of an application embodiment of a communication device according to the embodiment. Here, an embodiment applied to a communication coupler as a communication device will be described.

As illustrated in FIG. 1, a communication coupler 2 is a device that performs communication in accordance with an Internet Protocol (IP) network and includes a central processing unit (CPU) 21, a rotary switch 22, a communication interface (IF) (a communication part) 23, an IP address setting part 24, and a memory 25. The CPU 21 controls each constituent element according to information processing.

The IP address setting part 24 sets an IP address when the IP network is used. Specifically, the IP address setting part 24 sets a network address included in the IP address based on an instruction signal received via the communication IF 23 and sets a host address included in the IP address based on an instruction signal from the rotary switch 22. The IP address setting part 24 can also set the entire host address of the IP address by software based on an instruction signal received via the communication IF 23. The IP address set by the IP address setting part 24 is stored in the memory 25. Here, the instruction signal received via the communication IF 23 is generated in a support tool (a setting device) 4.

Since the rotary switch 22 is a hardware switch in which numerical values set in the communication device are visible, the host address can be easily checked from the set numerical values. Further, the rotary switch 22 is an embodiment of a "hardware switch" of the disclosure and another hardware switch such as a dip switch may be used as long as the switch is a hardware switch in which numerical values set in the communication device are visible.

In the foregoing configuration, the network address included in the IP address is set by software in the support tool 4 and the host address included in the IP address is set by hardware in the rotary switch 22. Thus, the network address and the host address included in the IP address can be freely set according to an intention of the user.

In the present embodiment, an example in which a communication coupler is applied as the communication device according to the disclosure will be described, but the disclosure is not limited thereto. For example, a controller 3 to be described below can also be applied as the communication device according to the disclosure.

### 2. Configuration embodiment

### (System 1)

FIG. 2 is a diagram illustrating an overview of an embodiment of a system 1 according to the present embodiment. As illustrated in FIG. 2, the system 1 includes a communication coupler 2, the controller 3, a support tool 4, a display input device 5, an analog signal input device 6, and an analog signal output device 7.

### (Communication coupler 2)

The communication coupler 2 is a device that performs communication in accordance with the IP network, as described above, and is a relay device that relays communication between a high-order network and various input and output parts. In the present embodiment, a system in which an input and output part is the analog signal input device 6 is shown as an example, but the disclosure is not limited thereto. For example, examples of the input and output parts include a digital signal input device, a motor control part, a robot control part, and a safety control part. In the present embodiment, the communication coupler 2 relays communication between the controller 3 and the analog signal input device 6 via the high-order network.

The communication coupler 2 includes one port or two or more ports as the communication IF 23 and can independently set an IP address for each port. This setting is performed by the support tool 4 to be described below.

### (Controller 3)

The controller 3 is a control device that performs general control of the entire system 1 and is also referred to as a programmable logic controller (PLC). The controller 3 operates a master device of the analog signal input device 6 in the system 1.

### (Support tool 4)

The support tool 4 is a device that is connected to the system 1 and used to perform operation setting or the like of various devices included in the system 1. The support tool 4 can be connected for communication to various devices in the system 1 via the controller 3.

The support tool 4 is connected to the system 1 and used to set a network address in the IP address setting part 24 in the communication coupler 2. That is, the support tool 4 can transmit an instruction signal necessary to set a network address for the communication coupler 2. As the support tool 4, an information processing device such as a PC can be used and a portable information processing device such as a notebook type computer can also be used.

The support tool 4 can also be directly connected to the communication coupler 2 through Ethernet (registered trademark) connection, as illustrated in FIG. 1. In this case, since the support tool 4 and the communication coupler 2 are directly connected one-to-one, communication can be performed between the support tool 4 and the communication coupler 2 in a state in which no IP address is set in the communication coupler 2. Further, the one-to-one direct connection between the support tool 4 and the communication coupler 2 is not limited to the Ethernet connection, but may be Universal Serial Bus (USB) connection.

### (Display input device 5)

The display input device 5 is, for example, a touch panel type of display input device. A user of the system 1 can operate the controller 3 via the display input device 5 or check an operation state of the system 1 in the display input device 5. For example, by displaying an IP address in each communication coupler 2 in the system 1 in the display input device 5, it is possible to allow the user to visually check the IP address.

### (Analog signal input device 6)

The analog signal input device 6 is a relay device that relays data between the analog signal output device 7 and the high-order network including the controller 3.

### (Analog signal output device 7)

The analog signal output device 7 (in this embodiment, the analog signal output device 7 includes analog signal output devices 7a and 7b) is connected to the analog signal input device 6 and is a device which is a control target of the controller 3. As the analog signal output device 7, for example, various sensors such as a photoelectronic sensor or a proximity sensor can be exemplified.

### (Flow of IP address setting process)

In the communication coupler 2, an IP address of each port (Port 1 and Port 2) of the communication IF 23 is set by the IP address setting part 24. The network address of the IP address set by the IP address setting part 24 is set using the support tool 4.

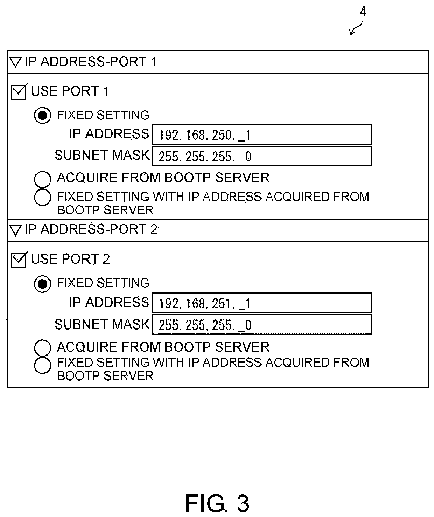

FIG. 3 illustrates an embodiment in which a tool screen of the support tool 4 is displayed. Here, a tool screen for setting the IP address for each of the two ports in the communication coupler 2 is displayed.

In FIG. 3, 192.168.250.1 is displayed as an IP address of Port 1. The network address "192.168.250." indicates values set by the support tool 4 and the remaining host address "1" indicates a value which can be changed to a value of the rotary switch 22. Similarly, 192.168.151.1 is displayed as an IP address of Port 2. The network address "192.168.251." indicates values set by the support tool 4 and the remaining host address "1" indicates a value which can be changed to a value of the rotary switch 22. A subnet mask "255.255.255.0" in each port indicates values set by the support tool 4.

In the communication coupler 2, only one port between the two ports can also be set. In this case, for example, a check of "Use Port 1" or "Use Port 2" on the tool screen illustrated in FIG. 3 may be removed.

FIG. 4 is a flowchart illustrating an embodiment of a flow of an IP address setting process in the communication coupler 2 according to the present embodiment. An embodiment of the flow of the IP address setting process in the communication coupler 2 will be described with reference to FIG. 4.

First, the CPU 21 determines whether the Ethernet connection with the support tool 4 is established (S11). Here, when the CPU 21 determines that the Ethernet connection is established, the CPU 21 sets a network address included in the IP address based on an instruction signal received from the support tool 4 (S12: network address setting step). Subsequently, the CPU 21 sets a host address included in the IP address based on an instruction signal from the rotary switch 22 (S13: host address setting step). S12 and S13 can be viewed on the above-described tool screen illustrated in FIG. 3 by the user.

Finally, the IP address including the set network address and host address is stored in the memory 25 (S14).

### (Operational effect)

In the foregoing configuration, the network address included in the IP address is set by software in the support tool 4 and the host address included in the IP address is set by hardware in the rotary switch 22. Thus, the network address and the host address included in the IP address can be freely set according to an intention of the user. Accordingly, the IP address can be freely changed in accordance with a device.

Further, since the host address can be changed without software, there is no limitation of a skill and authority of a worker. Since the rotary switch 22 setting the host address is the hardware switch, the host address can be visually checked in the place in which a device is used. Furthermore, since the network address is unfixed, the IP network to which many communication devices are connected can be flexibly configured.

Since the part (the network address) of the IP address is set by software in the support tool 4, a labor of the setting of the IP address is not taken compared to the case in which the entire IP address is set by the hardware switch.

### [Realized embodiment by software]

A control block (in particular, the IP address setting part 24) of the communication coupler 2 may be realized by a logic circuit (hardware) formed in an integrated circuit (IC chip) or may be realized by software.

In the latter case, the communication coupler 2 includes a computer that executes a command of a program which is software realizing each function. The computer includes, for example, one or more processors and includes a computer-readable recording medium that stores the program. In the computer, the processor reads the program from the recording medium and executes the program, so that an objective of the disclosure is realized. As the processor, for example, a central processing unit (CPU) can be used. As the recording medium, not only a "non-transitory medium" such as a read-only memory (ROM) but also a tape, a disc, a card, a semiconductor memory, a programmable logic circuit or the like can be used. A random access memory (RAM) or the like that loads the program may further be included. The program may be supplied to the computer via any transfer medium (a communication network, a carrier wave, or the like) capable of transmitting the program. An aspect of the disclosure can also be realized in a data signal form in which the program is electronically transmitted to be realized and which is embedded in a carrier wave.

### [Reference Signs List]

1 System
2 Communication coupler (communication device)
3 Controller
4 Support tool (setting device)
5 Display input device
6 Analog signal input device
7 Analog signal output device
21 CPU
22 Rotary switch (hardware switch)
23 Communication IF (communication part)
24 IP address setting part
25 Memory

## Claims

1. A communication device (2) performing communication in accordance with an Internet Protocol (IP) network, the communication device (2) **characterized by** comprising:
an IP address setting part (24) configured to set an IP address when the IP network is used,
wherein the IP address setting part (24) sets a network address included in the IP address based on an instruction signal received from a setting device (4) connected via a communication part (23) and sets a host address based on an instruction signal from a hardware switch (22).

2. The communication device (2) according to claim 1, wherein the hardware switch (22) is a hardware switch in which numerical values set in the communication device (2) are visible.

3. The communication device (2) according to claim 1 or 2, wherein the IP address setting part (24) sets the network address based on the instruction signal received through one-to-one communication connection with the setting device (4).

4. A method of controlling a communication device (2) performing communication in accordance with an Internet Protocol (IP) network, the method **characterized by** comprising:
setting (S12) a network address included in an IP address when the IP network is used, based on an instruction signal received from a setting device (4) connected via a communication part (23); and
setting (S13) a host address included in the IP address based on an instruction signal from a hardware switch (22).
